# EUROPÄISCHE PATENTSCHRIFT

(11) **EP 0 659 501 B1**
(45) Veröffentlichungstag und Bekanntmachung des Hinweises auf die Patenterteilung: **06.11.1996**
(21) Anmeldenummer: 93120369.9
(22) Anmeldetag: 16.12.1993
(51) Int. Cl.: B21J 7/14, B21J 13/03, B30B 7/04, B23Q 16/04

(54) **Schmiedemaschine**
Forging machine
Machine à forger

(43) Veröffentlichungstag der Anmeldung: 28.06.1995
(73) Patentinhaber: SMS HASENCLEVER GmbH, D-40225 Düsseldorf (DE)
(72) Erfinder: Schubert, Peter, D-41564 Kaarst (DE)
(74) Vertreter: Hemmerich, Friedrich Werner

(56) Entgegenhaltungen:
- EP-A- 0 549 825

## Beschreibung

Zum Schmieden längsachsenbetonter Werkstücke werden Schmiedemaschinen eingesetzt, die mit drei oder mehr in einer Ebene verteilt, insbesondere mit vier x-förmig um 90° zueinander versetzt angeordneten, radial auf das in der Systemachse längsgeführte Werkstücke einwirkenden, mit Werkzeugen besetzten Stößein versehen sind. Entsprechend dem hohen Umformvermögen dieser Radial-Umformungs-Schmiedemaschinen ist ein hoher Umschließungsgrad bis zur vollkommenen Umschließung des Werkstücks in der Umformzone vorzusehen. Die Werkzeuge sollen hierzu in einstellbaren Hubendlagen ein geschlossenes Kaliber bilden, wozu die Werkzeuge in ihrer gemeinsamen Ebene mittels Werkzeugsupporten an den Stößein durch auf die Supporte einwirkende Stellvorrichtungen in Abhängigkeit von der Einstellung der Hubendlage der Stößel derart einstellbar und feststellbar sind, daß sie mit ihrem das Kalibermaß übersteigenden Teil ihrer Arbeitsfläche von einer Seitenfläche des benachbarten Werkzeugs überdeckt sind (EP 0 228 030 B1, EP 0 260 546 B1, EP 0 549 825 B1).

Bei den bekannten Schmiedemaschinen sind die Werkzeugsupporte mit den Stößein durch jeweils einen Support gegen eine Stößelstirnfläche spannende, lösbare Klemmelemente und die Werkzeuge mit den Supporten verbunden, wobei zur Einstellung der Werkzeuge die Klemmelemente gelöst werden. In die Stößelstirnflächen und die diesen zugekehrten Flächen der Supporte sind Zahnleisten eingelassen, die mit quer zur Stellrichtung gerichteten Verzahnungen versehen sind und bei an den Stößelstirnflächen anliegenden Supporten einen Formschluß durch Zahneingriff herstellen. Zur Verschiebung der Supporte quer zu den Stößeln müssen die Supporte daher so weit von den Stirnflächen der Stößel abgedrückt werden, daß die Verzahnungen außer Eingriff gelangen. Der hierbei entstehende Sog kann zu einem Eindringen von Schmutz (Zunder) in die Spalte zwischen Stößelstirnflächen und Supporte, und damit zu einer Beeinträchtigung der Verbindung von Stößeln und Supporten führen, falls dem nicht durch Aus blasen von Luft entgegengewirkt wird (EP 0 228 030 B1).

Die Erfindung hat die Aufgabe die Verbindungen der Stößel und Werkzeugsupporte der Schmiedemaschinen nach dem Oberbegriff des Anspruchs 1 dahingehend zu verbessern, daß sie den rauhen Bedingungen des Schmiedebetriebs besser angepaßt sind.

Diese Aufgabe wird erfindungsgemäß dadurch gelöst, daß die Supporte an ihren zur Stellebene parallelen Seiten mit Verzahnungen quer zur Stellrichtung versehen sind, in die an den Stößeln in Stellrichtung arretierte Riegelstücke ein- und ausrückbar sind.

Eine baulich einfache, robuste und somit besonders vorteilhafte Lösung besteht darin, daß gemäß einem weiteren Merkmale der Erfindung die Riegelstücke um zur Stellrichtung parallele Achsen schwenkbar an ihrem Stößel befestigt sind und an ihren freien, den Supporten zugekehrten Enden mit Verzahnungen versehen sind, die mit den Verzahnungen an den Supporten korrespondieren.

Zum Einrücken der Riegelstücke werden insbesondere Federn vorgesehen, denen Kolben-Zylinder-Einheiten entgegenwirken, die zum Ausrücken der Riegel beaufschlagbar sind.

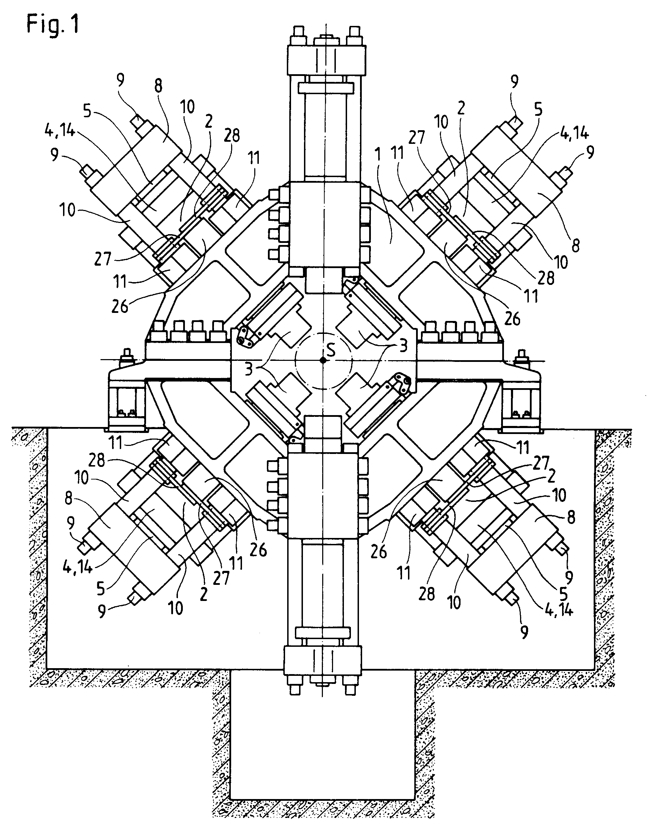

Ein Ausführungsbeispiel der Erfindung ist in den Zeichnungen dargestellt. Es zeigen die
- Figur 1: in einer Stirnansicht die Schmiedemaschine in Richtung der Systemachse S gesehen, zu der die

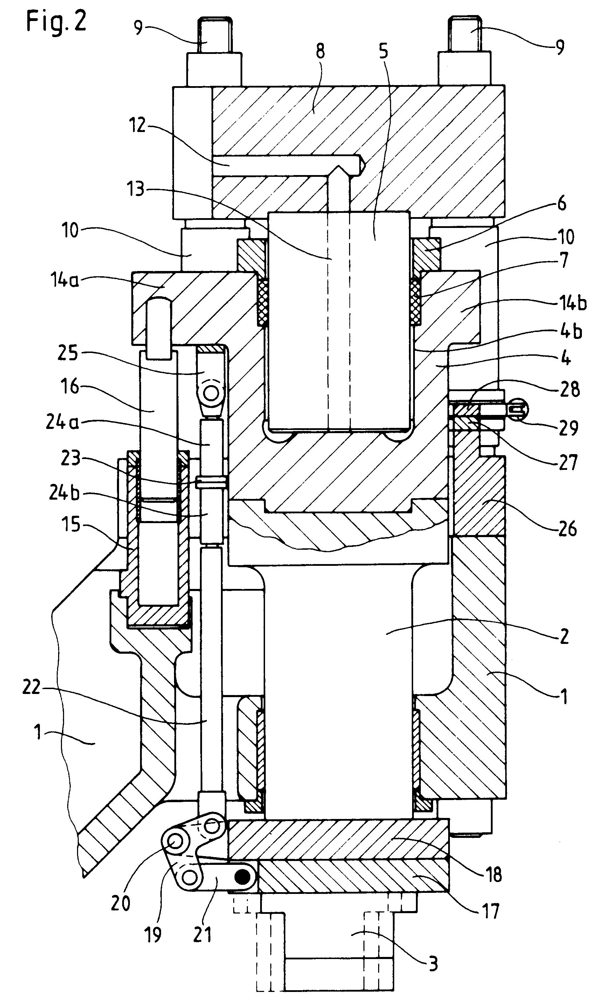

- Figur 2: in größerem Maßstab einen Ausschnitt im Schnitt in der zur Systemachse S senkrechten Arbeitsebene der Werkzeuge und im oberen rechten Teil dieser Figur 2 in einer die Systemachse S einschließenden Ebene zeigt. In
- Figur 3: ist in nochmals vergrößertem Maßstab ein Ausschnitt der Stirnansicht dargestellt und ergänzend hierzu ist die in Figur 3 dargestellte Einzelheit in
- Figur 4: in einer teilweise geschnittenen Seitenansicht und in
- Figur 5: in einer Aufsicht dargestellt. Der in Figur 5 durch die Umkreisung VI gekennzeichnete Ausschnitt ist in
- Figur 6: weiter vergrößert dargestellt.

Die Schmiedemaschine besteht aus einem Rahmen 1, der in einer zur Systemachse S senkrechten Ebene vier Stößel 2 führt, die x-förmig um 90° zueinander versetzt in der Ebene angeordnet und radial zur Systemachse S bewegbar sind. Die Stößel 2 sind an ihren der Systemachse S zugewandten Enden mit Werkzeugen 3 besetzt. An ihren der Systemachse S abgewandten Enden sind die Stößel 2 als nach außen geöffnete Zylinder 4 ausgebildet, d.h. mit einer Zylinderbohrung 4b versehen, wobei die die Zylinder 4 bildenden Teile der Stößel getrennte, mit den Stößeln 2 lösbar verbundene Teile bilden können.

Eingesetzt in die Zylinder 4 sind Plungerkolben 5 mit Stopfbüchsen 6 und Dichtungen 7. Die Kolben 5 stützen sich an Traversen 8 ab, die durch Zuganker 9 mit dem Rahmen unter Zwischenschaltung von Stützblöcken 11 und Drucksäulen 10 unter Vorspannung verbunden sind. Über die Bohrungen 12 in den Traversen 8 und die Bohrungen 13 in den Kolben 5 kann Druckmittel zu- oder abgeführt werden. Die Zylinder 4 sind mit Flanschen 14 versehen, die mit je zwei Auskragungen 14a versehen sind. Kolben-Zylinder-Einheiten, deren Zylinder 15 am Rahmen 1 abgestützt sind, bewirken mit ihren Kolben 16, die auf die Auskragungen 14a und damit auf die Zylinder 4 und Stößel 2 einwirken, den Rückzug der Stößel 2 mit den Werkzeugen 3.

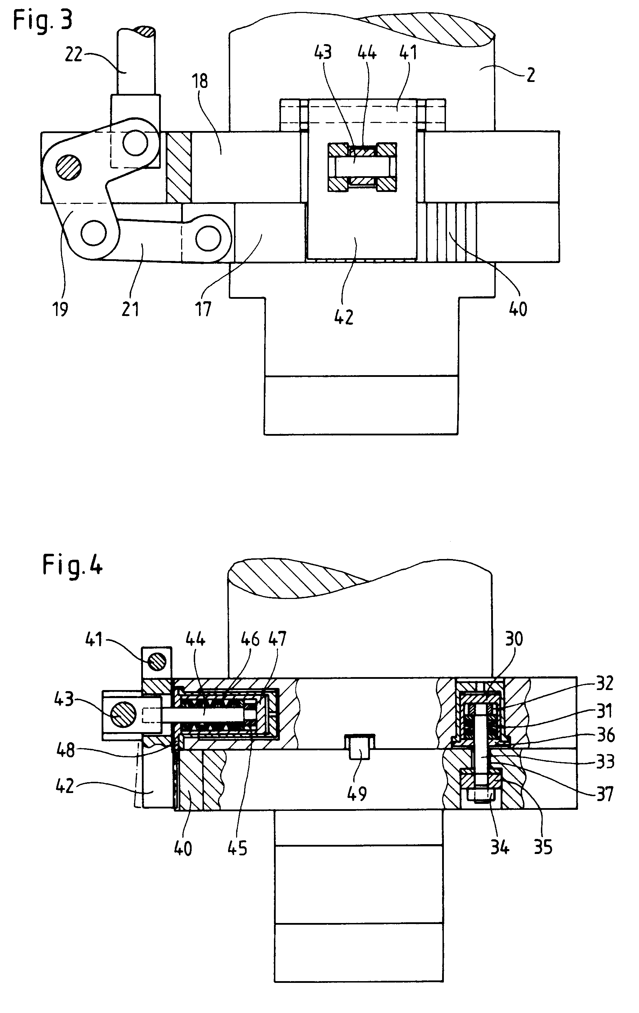

Die Werkzeuge 3 sollen in den Hubendlagen der Stößel 2 praktisch geschlossene Kaliber bilden. Um geschlossene Kaliber unterschiedlichen Querschnitts ohne Werkzeugwechsel bilden zu können sind die Werkzeuge 3 auf Supporten 17 befestigt und mit diesen in der Arbeitsebene der Werkzeuge 3 quer zu den Stößeln 2 an Stirnplatten 18 der Stößel 2 verschiebbar, wobei die Verschiebung in einem Maße erfolgt, daß eine Kollision mit dem benachbarten Werkzeug 3 in dessen Hubendlage ausgeschlossen ist. Die Querverschiebung eines Werkzeugs 3 erfolgt abhängig von der Einstellung der Hubendlage des benachbarten Werkzeugs 3, welches mit seiner nicht genutzten Arbeitsbreite die zugekehrte Seitenfläche ersteren Werkzeugs 3 überdeckt. Zur Verschiebung der Supporte 17 entlang den Stirnplatten 18 der Stößel 2 ist jeweils ein Winkelhebel 19 vorgesehen, der um einen Bolzen 20 drehbar in der Stirnplatte 18 des Stößels 2 gelagert, über eine Lasche 21 mit dem Support 17 verbunden und über ein Zug-/Druck-Gestänge 22 von einem Linearhubantrieb 23 schwenkbar ist. Der Linearhubantrieb 23 ist mit dem Stößel 2 über dessen Zylinder 4 verbunden und an dessen Flansch 14 abgestützt. Der Support 17 ist mit der Stirnplatte 18 des Stößels 2 durch in den Figuren 3 bis 6 näher beschriebene Klemm- und Verriegelungseinrichtungen verbunden, die zur Querverschiebung des Supports 17 mit Werkzeug 3 gelöst werden. Der Linearhubantrieb 23 ist aus zwei stirnseitig miteinander verbundenen Kolben-Zylinder-Einheiten 24a und 24b gebildet, wobei die Kolbenstange der Kolben-Zylinder-Einheit 24a über einen Lagerbock 25 mit dem Flansch 14 verbunden ist, während die Kolbenstange der Kolben-Zylinder-Einheit 24b in Verlängerung mit dem Zug-/Druck-Gestänge 22 verbunden ist. Durch Beaufschlagung einer oder beider Kolben-Zylinder-Einheiten 24a oder 24b ergibt sich der einfache oder zweifache Hub des Zug-/Druck-Gestänges 22 und entsprechend wird der Support 17 mit Werkzeug 3 in eine erste oder zweite der gestrichelt dargestellten Stellungen des Werkzeugs verschoben. Den drei Stellungen des Werkzeugs 3 entsprechend ist der Stößel 2 in drei definierte Hubendlagen bringbar. Dazu ist im Wege der Auskragungen 14b des Stößels 2 und des mit ihm verbundenen Zylinders 4 mit seinem Flansch 14 zu beiden Seiten des Stößels 2 ein Anschlagklotz 26 an dem Rahmen 1 befestigt. Diese Anschlagklötze 26 legen die Hubendlage des Stößels 2 mit Werkzeug 3 fest, in der diese den geringsten Abstand zur Systemachse S erreichen. Andere Hubendlagen des Stößels 2 mit Werkzeug 3 werden durch Distanzplatten 27 und 28 bestimmt, die um die Säulen 10 von Kolben-Zylinder-Einheiten 29 schwenkbar sind in Stellungen über den Anschlagklötzen 26 im Wege der Auskragungen 14b.

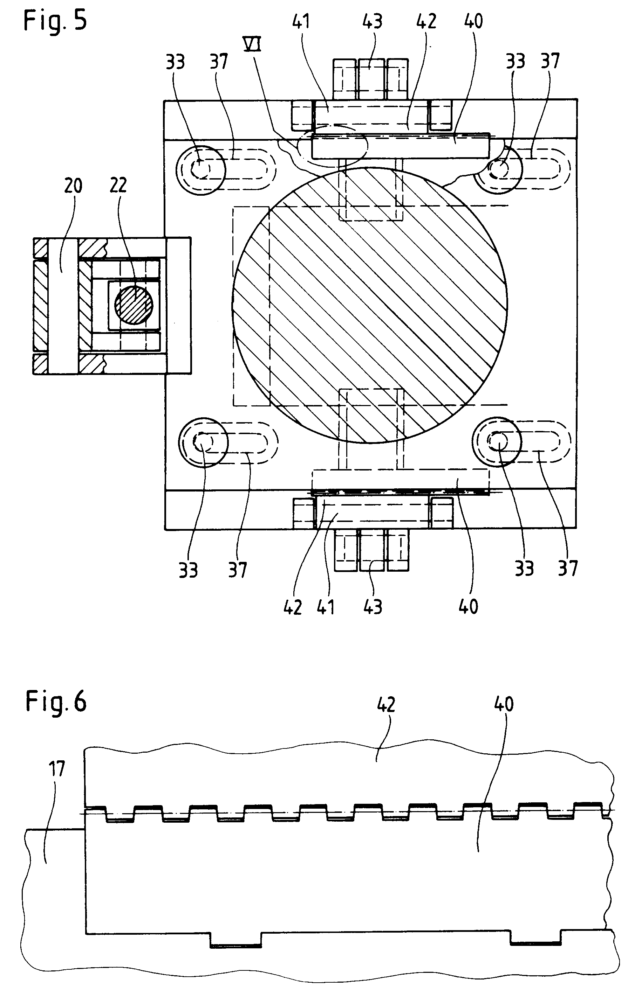

Wie aus den Figuren 3 bis 6 in den Einzelheiten ersichtlich ist, sind zur Verbindung des Supports 17 mit der Stirnplatte 18 des Stößels 2 vier Klemmeinheiten vorgesehen, die (siehe Figur 4) aus je einem Zylinder 30 mit in diesem geführten, gegen die Kraft einer Feder 31 durch Beaufschlagung mit einem Druckmittel bewegbaren Kolben 32 mit Kolbenstange 33 sowie einer mit der Kolbenstange 33 durch eine Mutter 34 verbundenen Druckplatte 35 besteht. Der Zylinder 30 ist fest in die Stirnplatte 18 eingesetzt und mit einem Deckel 36 versehen, der der Feder 31 als Stütze dient. Die Kolbenstange 33 durchsetzt ein Langloch 37 im Support 17, das zu einer T-Nut erweitert ist, an deren Schultern die Druckplatte 35 anliegt. Der Support 17 ist an beiden parallel zur Arbeitsebene gelegenen Seiten mit Zahnleisten 40 versehen. An der Stirnplatte 18 sind um Achsen 41 schwenkbar Riegelstücke 42 angeordnet, die Verzahnungen tragen, die mit den Verzahnungen der Zahnleisten 40 korrespondieren. Die Riegelstücke 42 sind über Achsen 43 mit Kolbenstangen 44 verbunden deren Kolben 45 unter der Wirkung der Federn 46 stehen, durch die die Riegelstücke 42 eingerückt sind. Gegen die Kraft der Federn 46 sind die Kolben 45 in Zylindern 47 durch Druckmittel beaufschlagbar, womit die Riegelstücke 42 ausgerückt werden. Die Zylinder 47 sind in der Stirnplatte 18 befestigt und mit die Federn 46 stützenden Deckeln 48 versehen. Nachdem die Verbindung des Supports 17 mit der Stirnplatte 18 durch Beaufschlagung der Kolben 32 gelöst und die Verriegelung zwischen den Zahnleisten 40 und den Riegelstücken 42 aufgehoben ist, kann die Verschiebung des Supports 17 gegenüber der Stirnplatte 18 durch den Linearhubantrieb 23 über das Gestänge 22, den Winkelhebel 19 und die Lasche 21 erfolgen. Hierbei dient eine Leiste 49, die in Nuten der Stirnplatte 18 und des Supports 17 eingreift zur Führung des Supports 17 an der Stirnplatte 18. Nach erfolgter Verstellung werden die Kolben 32 und 45 druckentlastet, so daß unter der Wirkung der Federn 31 und 46 der Support 17 wieder gegen die Stirnplatte 18 geklemmt und verriegelt ist.

Die in Figur 6 gezeigte Verzahnung der Zahnleisten 40 mit den Riegelstücken 42 ist bemessen als ein ganzzahliger Bruchteil der von einer der Kolben-Zylinder-Einheiten 23 bewirkten Verstellung des Supports 17 gegenüber der Stirnplatte 18.

## Patentansprüche

1. Schmiedemaschine mit vier x-förmig in einer Ebene angeordneten, um 90° gegeneinander versetzten, radial auf das in der Systemachse (S) längsgeführte Werkstück einwirkenden, mit Werkzeugen (3) besetzten Stößeln (2), wobei die Werkzeuge (3) in ihrer gemeinsamen Ebene mittels Werkzeugsupporten (17) durch auf die Supporte (17) einwirkende Stellvorrichtungen (23) quer zu den Stößeln (2) verstellbar und die Supporte (17) gegenüber den Stößeln (2) durch ein- und ausrückbare, formschlüssige Verriegelungen (42) und lösbare Klemmvorrichtungen (30-36) festlegbar sind,
**dadurch gekennzeichnet**,
daß die Supporte (17) an ihren zur Stellebene parallelen Seiten mit Verzahnungen (40) quer zur Stellrichtung versehen sind, in die an den Stößeln (2) in Stellrichtung arretierte Riegelstücke (42) ein- und ausrückbar sind.

2. Schmiedemaschine nach Anspruch 1,
**dadurch gekennzeichnet**,
daß die Riegelstücke (42) um zur Stellrichtung parallele Achsen (41) schwenkbar am Stößel (2) befestigt sind und an ihren freien den Supporten (17) zugekehrten Enden mit Verzahnungen versehen sind, die mit den Verzahnungen (40) an den Supporten (17) korrespondieren.

3. Schmiedemaschine nach Anspruch 1 oder 2,
**dadurch gekennzeichnet**,
daß zum Einrücken der Riegelstücke (42) Federn (46) vorgesehen sind, denen Kolben-Zylinder-Einheiten (45,47) entgegenwirken, die zum Ausrücken der Riegelstücke (42) beaufschlagbar sind.

## Claims

1. A forging machine with four rams (2) which are arranged in a cruciform manner in one plane, are offset at 90° to one another, act radially upon the workpiece guided longitudinally in the system axis (**S**) and are equipped with tools (3), wherein the tools (3) are displaceable in their common plane by means of tool supports (17) by displacement devices (23), acting upon the supports (17), transversely to the rams (2) and the supports (17) can be set with respect to the rams (2) by engageable and disengageable positive locking means (42) and releasable clamping devices (30 to 36), **characterized in that** the supports (17) are provided on their sides parallel to the displacement plane with sets of teeth (40) transversely to the displacement direction, into and out of which locking members (42), locked on the rams (2) in the displacement direction, can be engaged and disengaged.

2. A forging machine according to Claim 1, **characterized in that** the locking members (42) are secured to the ram (2) so as to be pivotable about shafts (41) parallel to the displacement direction and are provided at their free ends, facing the supports (17), with sets of teeth corresponding to the sets of teeth (40) on the supports (17).

3. A forging machine according to Claim 1 or 2, **characterized in that** springs (46) are provided to engage the locking members (42), the springs (46) being counteracted by piston-cylinder units (45, 47) which can be acted upon in order to disengage the locking members (42).

## Revendications

1. Machine à forger comportant quatre coulisseaux (2), disposés en forme de x dans un plan, décalés de 90° l'un par rapport à l'autre, agissant radialement sur la pièce à forger guidée longitudinalement selon l'axe (S) du système et garnis d'outils (3), les outils (3) pouvant être déplacés, transversalement par rapport aux coulisseaux (2), dans leur propre plan, au moyen de supports (17) d'outil, par des dispositifs de réglage (23) agissant sur les supports (17) et les supports (17) pouvant être bloqués par rapport aux coulisseaux (2) par des verrous (42) à complémentarité de forme , pouvant engrener et désengrener, et par des dispositifs de serrage (30-36) desserrables,
caractérisée
par le fait que, sur leurs faces parallèles au plan de réglage, les supports (17) sont munis, perpendiculairement à la direction de réglage, de dentures (40) dans lesquelles des pênes (42), maintenus sur les coulisseaux (2) en position de réglage, peuvent engrener et désengrener.

2. Machine à forger selon la revendication 1,
caractérisée
par le fait que les pênes (42) sont fixés sur le coulisseau (2) avec liberté de pivoter autour d'axes (41) parallèles à la direction de réglage et qu'à leurs extrémités libres orientées vers les supports (17), ils sont munis de dentures qui correspondent aux dentures (40) prévues sur les supports (17).

3. Machine à forger selon la revendication 1 ou 2,
caractérisée
par le fait que pour faire engrener les pênes (42) sont prévus des ressorts (46) à l'encontre desquels agissent des vérins (45, 47) qui peuvent être contraints pour désengrener les pênes (42).
